# FASCICULE DE BREVET EUROPEEN

(11) **EP 0 575 242 B1**
(45) Date de publication et mention de la délivrance du brevet: **21.08.1996**
(21) Numéro de dépôt: 93401530.6
(22) Date de dépôt: 15.06.1993
(51) Int. Cl.: B60S 1/34

(54) **Dispositif d'essuie-glace à capuchon articulé sur la tige d'accrochage du ressort**
Scheibenwischer mit Abdeckkappe, die am Befestigungsstift der Anpressfeder schwenkbar gelagert ist
Windscreen wiper arrangement with a cap which pivots on the anchor pin of the spring

(30) Priorité: 16.06.1992 FR 9207271
(43) Date de publication de la demande: 22.12.1993
(73) Titulaire: VALEO SYSTEMES D'ESSUYAGE, 78321 La Verrière (FR)
(72) Inventeur: Eustache, Jean-Pierre, F-92160 Antony (FR); Maubray, Daniel, F-92130 Issy-les-Moulineaux (FR)
(74) Mandataire: Martin, Jean-Jacques

(56) Documents cités:
- DE-C- 3 532 848
- FR-A- 2 124 713
- FR-A- 2 488 842
- US-A- 3 429 597

## Description

La présente invention concerne le domaine des dispositifs d'essuie-glace, et plus particulièrement les dispositifs d'essuie-glace destinés à l'essuyage d'un pare-brise de véhicule automobile.

Il est connu des dispositifs d'essuie-glace qui comprennent une tête d'entraînement apte à être couplée en rotation avec un arbre d'entraînement et un bras d'essuie-glace comprenant un carter, articulé par une extrémité sur ladite tête d'entraînement autour d'un axe de débattement s'étendant transversalement audit arbre d'entraînement, prolongé à l'autre extrémité par une tige porte-balai engagée dans le carter et portant un balai d'essuyage adapté à venir au contact d'une surface à essuyer.

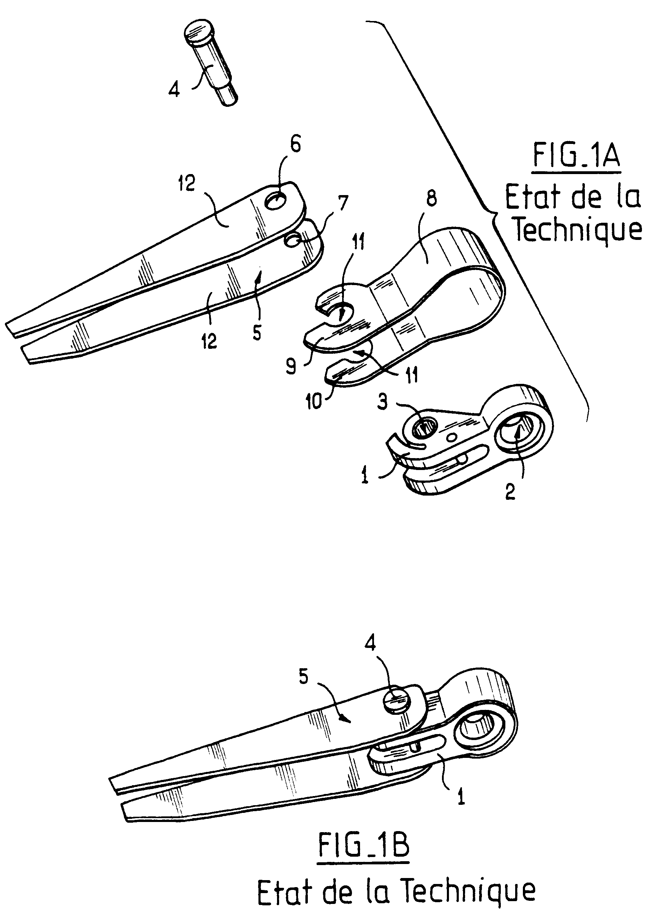

On a représenté sur les figures 1A et 1B illustrant l'état de la technique sur lequel repose l'invention, respectivement en vue éclatée et assemblée, les différents éléments constitutifs d'un dispositif d'essuie-glace connu au niveau de la liaison entre le carter et la tête d'entraînement. On aperçoit sur la figure 1A une tête d'entraînement 1, comprenant un premier alésage 2 destiné à recevoir un arbre d'entraînement non représenté et un deuxième alésage 3, d'axe perpendiculaire au premier, destiné à recevoir un rivet 4 servant de pivot à l'articulation sur la tête d'entraînement 1 d'un carter 5 partiellement représenté. Le carter 5 présente une section transversale ayant généralement la forme d'un U retourné, comprenant deux ailes latérales 12 raccordées à un dos. Deux perçages 6 et 7 sont prévus dans les ailes latérales 12 en regard l'un de l'autre pour recevoir le rivet 4.

Pour des raisons essentiellement esthétiques, un capuchon 8 en matière plastique coiffe la tête d'entraînement 1, ce capuchon 8 étant mis en place sur la tête d'entraînement lors de l'assemblage du carter 5 sur celle-ci, et comprend deux pattes 9 et 10 disposées à l'intérieur du carter, munies chacune d'une ouverture 11 destinée au passage du rivet 4. Le capuchon 8 est ainsi retenu sur la tête d'entraînement 1 grâce aux pattes 9 et 10 lors du rivetage du carter 5 sur la tête d'entraînement 1. Lors de cette opération de rivetage, les pattes 9 et 10, en matière plastique, et donc relativement fragiles, risquent d'être endommagées si les ouvertures 11 sont mal positionnées en regard des perçages 6 et 7 du carter, par pinçage entre les ailes latérales 12 du carter et le corps de la tête d'entraînement 1.

Par ailleurs, on remarque à l'examen de la figure 1B, qu'après assemblage, la tête du rivet 4 fait saillie sur la surface externe du carter 5. Or, la tendance actuelle dans les véhicules automobiles modernes est de rechercher des lignes de carrosserie ou d'accessoires les plus lisses possibles, et la Demanderesse a constaté que les bras d'essuie-glace connus, avec les têtes des rivets en saillie sur la surface externe du carter vont à l'encontre de cette tendance.

Le document US-3 429 597 représente un essuie-glace dont le capuchon comporte deux ergots pour le monter en rotation dans deux trous percés à cet effet dans le bras d'essuie-glace.

La présente invention a pour objet un dispositif d'essuie-glace amélioré, remédiant aux inconvénients précités.

La présente invention propose pour cela un dispositif d'essuie-glace, comportant une tête d'entraînement susceptible d'être couplée en rotation à un arbre d'entraînement et un bras d'essuie-glace, ce bras d'essuie-glace comprenant un carter articulé par une extrémité sur la tête d'entraînement autour d'un axe de débattement s'étendant transversalement audit arbre d'entraînement, une tige porte-balai engagée à une extrémité dans le carter, apte à recevoir par son autre extrémité un balai d'essuyage adapté à venir au contact d'une surface à essuyer, et un ressort de pression de contact agissant entre la tête d'entraînement et le bras d'essuie-glace, en vue de presser le balai sur la surface à essuyer, le dispositif comprenant en outre un capuchon destiné à coiffer en position de travail du dispositif d'essuie-glace la tête d'entraînement et l'extrémité du carter articulée sur celle-ci, le capuchon étant maintenu en place par complémentarité de formes entre des premiers moyens de montage prévus sur la surface interne du capuchon et des seconds moyens de montage situés sur la surface externe de l'extrémité du carter articulée sur la tête d'entraînement, le capuchon étant retenu sur la tête d'entraînement de manière à pouvoir pivoter autour d'un axe de montage (Dispositif du type divulgué par US-A-3 429 597), caractérisé en ce que l'axe de montage coïncide avec l'axe d'une tige cylindrique solidaire de la tête d'entraînement et servant à l'accrochage dudit ressort de pression de contact sur cette dernière.

Divers modes de réalisation de l'invention sont précisés dans les revendications dépendantes 2 à 6

D'autres caractéristiques et avantages de l'invention apparaîtront à la lecture de la description détaillée, d'exemples de réalisation non limitatifs de l'invention, qui va suivre, et à l'examen du dessin annexé sur lequel :
- les figures 1A et 1B, précédemment décrites, illustrent l'état de la technique,
- la figure 2 est une vue de côté selon une direction parallèle à l'axe de débattement, avec coupe longitudinale partielle de certains éléments, prise dans un plan médian contenant l'axe d'entraînement et perpendiculaire à l'axe de débattement, d'un dispositif d'essuie-glace partiellement représenté, conforme à un premier mode de réalisation de l'invention,
- la figure 3 est une vue en coupe schématique selon un plan de coupe perpendiculaire au plan de la vue de la figure 2,
- la figure 4 est une vue en coupe analogue à la figure 3, d'un deuxième mode de réalisation de l'invention.

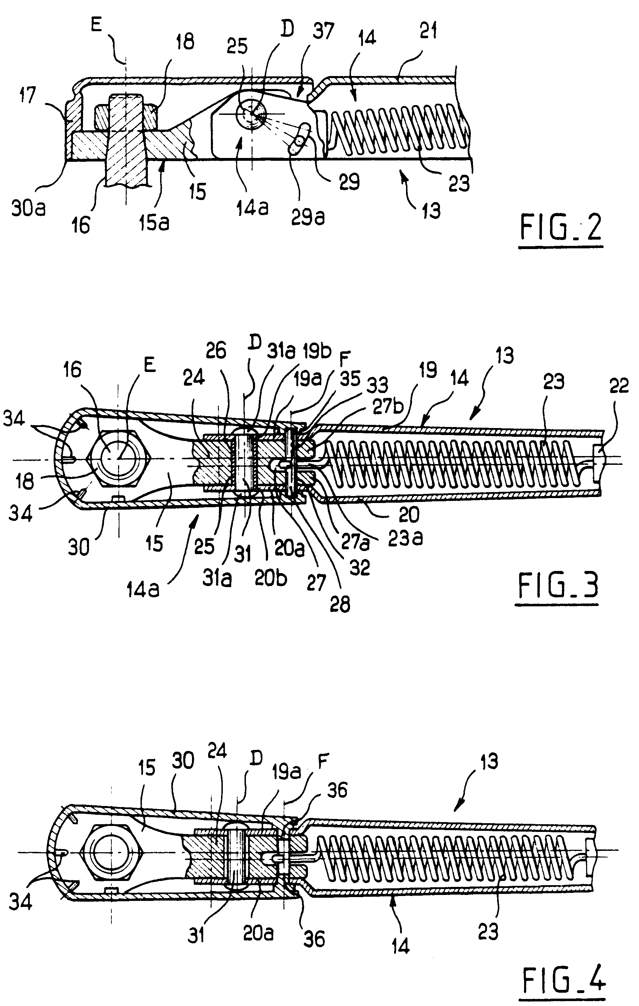

On a partiellement représenté sur les figures 2 et 3 un bras d'essuie-glace 13 comprenant un carter 14 articulé à une extrémité 14a sur une tête d'entraînement 15 autour d'un axe de débattement D s'étendant perpendiculairement au plan de la figure 2 et contenu dans le plan de la figure 3. La tête d'entraînement 15 est susceptible d'être couplée en rotation autour d'un axe d'entraînement E perpendiculaire à l'axe de débattement D, et la tête d'entraînement 15 est traversée à cet effet par un alésage 17 d'axe E, à portée conique, dans lequel un arbre d'entraînement 16 partiellement représenté est engagé. Cet arbre d'entraînement 16 présente à son extrémité supérieure s'étendant hors de l'alésage 17 un filetage sur son flanc externe, pour recevoir un écrou 18 de serrage de la tête d'entraînement 15 sur l'arbre d'entraînement 16.

Le carter 14, partiellement représenté sur les figures 2 et 3, présente une section transversale ayant généralement la forme d'un U renversé, comprenant deux ailes latérales 19 et 20 raccordées à angle droit à un dos 21. Une tige porte-balai 22, dont on a représenté seulement l'extrémité engagée dans le carter 14 sur la figure 3, supporte à son autre extrémité un balai connu en lui-même et non représenté apte à venir au contact d'une surface à essuyer. Un ressort de pression de contact 23 est logé dans le carter 14 et agit entre la tête d'entraînement 15 et le bras d'essuie-glace 13, en vue de presser le balai sur la surface à essuyer.

Si l'on se reporte plus particulièrement à la figure 3, on remarque que la tête d'entraînement 15 comporte une partie d'articulation 24 s'étendant transversalement par rapport à l'axe E de l'alésage 17 entre les deux ailes latérales 19 et 20 du carter au niveau de la première extrémité 14a de celui-ci, articulée sur la tête d'entraînement 15. Plus précisément, la partie 24 de la tête d'entraînement 15 vient se loger entre deux portions rapprochées 19a et 20a des ailes 19 et 20, ces portions 19a et 20a s'étendant seules en avant du dos 21 du carter, et en ménageant à leur partie supérieure un dégagement 37. On remarquera que les faces intérieures des portions rapprochées 19a et 20a des ailes latérales 19 et 20 s'appliquent sur les faces latérales de la partie d'articulation 24 perpendiculaires à l'axe de débattement D, assurant ainsi une bonne résistance mécanique de la liaison entre le bras de l'essuie-glace 13 et la tête d'entraînement 15 lorsque cette dernière est entraînée en rotation autour de l'axe d'entraînement E. La partie d'articulation 24 de la tête d'entraînement 15 est traversée par un alésage transversal 25 centré sur l'axe de débattement D, cet alésage 25 recevant une douille cylindrique 26 servant de palier à l'articulation entre le bras d'essuie-glace 13 et la tête d'entraînement 15 autour de l'axe de débattement D. Un rivet 31 est engagé dans des perçages 19b et 20b prévus sur les portions rapprochées 19a et 20a des ailes latérales du carter en regard des ouvertures cylindriques de l'alésage 25 et sert de pivot à l'articulation du carter 14 sur la tête d'entraînement 15. Ce rivet 31 possède à ses extrémités extérieures deux têtes 31a dont la base s'applique sur la surface externe des portions rapprochées 19a et 20a des ailes latérales du carter bordant les perçages 19b et 20b. La partie d'articulation 24 de la tête d'entraînement 15 est munie à son extrémité opposée à l'alésage 17 d'une fente longitudinale 27 s'étendant entre deux flasques 27a et 27b, entre lesquels est disposé un crochet d'extrémité 23a du ressort de pression de contact 23, ce crochet d'extrémité 23a s'accrochant sur une tige d'accrochage 28 s'étendant parallèlement à l'axe de débattement D entre les deux flasques 27a et 27b.

Plus précisément, la tige d'accrochage de ressort 28 s'étend dans des alésages traversants 32 et 33 prévus sur les deux flasques 27a et 27b de la partie d'articulation 24 et, selon un mode de réalisation avantageux de l'invention, la tige d'accrochage 28 présente des extrémités extérieures qui se prolongent au-delà des flasques 27a et 27b sur une épaisseur supérieure à l'épaisseur des ailes latérales 19 et 20 pour faire saillie sur la surface externe du carter, à la faveur de deux trous oblongs 29 prévus sur les portions rapprochées 19a et 20a du carter 14. Ces trous oblongs 29 servent de butée haute au mouvement de pivotement du bras d'essuie-glace 13 autour de l'axe de débattement. En effet, lorsque le bras d'essuie-glace 13 est relevé dans le sens anti-horaire sur la figure 2 en vue de libérer le pare-brise, les extrémités en saillie de la tige d'accrochage 28 du ressort 23 viennent buter contre le périmètre intérieur des extrémités inférieures 29a des trous oblongs 29.

Pour des raisons esthétiques, comme cela a été évoqué dans le préambule, mais également pour protéger la tête d'entraînement et l'extrémité du carter articulée sur cette tête d'entraînement de la corrosion, un capuchon 30 en matière plastique coiffe la tête d'entraînement 15 lorsque l'essuie-glace est couplé à l'arbre d'entraînement et, conformément à une caractéristique incluse dans le préambule de la revendication 1, le capuchon 30 vient également coiffer en position de travail de l'essuie-glace l'extrémité 14a du carter 14 articulée sur la tête d'entraînement.

Conformément à une caractéristique incluse dans le préambule de la revendication 1, le capuchon 30 est maintenu en place par complémentarité de formes entre des premiers moyens de montage prévus sur la surface interne du capuchon et des seconds moyens de montage situés sur la surface externe de l'extrémité 14a du carter articulée sur la tête d'entraînement 15.

Dans le mode de réalisation des figures 2 et 3, les premiers moyens de montage prévus sur la surface interne du capuchon sont constitués par les logements cylindriques 35 aptes à s'engager sur des parties saillantes correspondantes situées sur la surface externe de l'extrémité 14a du carter et, conformément à un mode de réalisation avantageux de l'invention, ces parties saillantes formant seconds moyens de montage sont constituées par les deux extrémités de la tige cylindrique 28 servant à l'accrochage du ressort de pression de contact 23 sur la tête d'entraînement, cette tige 28 étant solidaire de la tête d'entraînement 15, comme cela a été précisé plus haut.

Ainsi, comme représenté sur les figures 2 et 3 le capuchon 30 est retenu sur la tête d'entraînement 15 de manière à pouvoir pivoter autour d'un axe de montage F qui coïncide conformément à l'invention, avec l'axe de la tige 28 d'accrochage du ressort de pression de contact 23. Le capuchon 30 peut ainsi être relevé de sa position où il coiffe la tête d'entraînement 15 et l'extrémité 14a du carter 14, représentée sur la figure 2, en l'entraînant manuellement en pivotement autour de la tige d'accrochage 28 du ressort 23 dans un sens horaire sur la figure 2, c'est-à-dire dans un sens allant de la tête d'entraînement 15 vers le carter 14 de l'essuie-glace, ce qui libère l'accès à la liaison entre l'arbre d'entraînement 16 et la tête d'entraînement 15, par exemple lors de la pose de l'essuie-glace ou du remplacement du dispositif d'essuie-glace.

Conformément à un autre mode de réalisation avantageux de l'invention, le capuchon 30 comporte sur sa surface interne des nervures radiales 34 aptes à servir de butée de pivotement autour de l'axe de montage F pour le capuchon, par appui sur la surface externe de la tête d'entraînement. Plus précisement, ces nervures radiales 34 viennent s'appuyer, lorsque le capuchon est en position où il coiffe la tête d'entraînement comme représenté sur la figure 2, sur la surface supérieure de la tête d'entraînement 15 bordant l'alésage 17 et sur laquelle s'appuie l'écrou 18, de sorte que le bord libre inférieur 30a de la paroi latérale du capuchon 30 s'aligne avec la surface inférieure plane 15a de la tête d'entraînement 15.

On peut naturellement proposer d'autres réalisations de montage du capuchon 30 sur la tête d'entraînement 15 par complémentarité de formes entre des premiers moyens de montage prévus sur la surface interne du capuchon et des seconds moyens de montage situés sur la surface externe de l'extrémité 14a du carter 14 articulée sur la tête d'entraînement 15.

Par exemple, on a représenté sur la figure 4 un deuxième mode de réalisation dans lequel les logements cylindriques 35 du mode de réalisation précédemment décrit ont été remplacés par des tétons 36 en saillie sur la surface interne du capuchon 30, disposés en vis-à-vis l'un de l'autre, ces tétons 36 étant aptes à s'engager dans les perçages oblongs 29 précités des ailes latérales 19a et 20a du carter, en retrait desquels se situe la tige d'accrochage 28 du ressort 23, et dans les ouvertures extérieures des alésages 32 et 33. Bien entendu, dans ce cas, les perçages oblongs 29 ne servent plus de butée haute au mouvement de pivotement du bras d'essuie-glace 13.

Finalement, un dispositif d'essuie-glace conforme à l'invention permet d'obtenir une liaison esthétique du capuchon sur la tête d'entraînement, et en recouvrant les têtes du rivet 31 servant de pivot à l'articulation du carter 14 sur la tête d'entraînement 15, offre également une meilleure protection vis-à-vis de la corrosion, tout en autorisant naturellement par pivotement du capuchon autour de son axe de fixation un accès facile à la liaison entre la tête d'entraînement 15 et l'arbre d'entraînement.

Le capuchon se positionne par ailleurs, grâce aux surfaces externes en retrait par rapport au reste du carter des portions rapprochées 19a et 20b des ailes latérales 19 et 20 et au dégagement 37, dans l'alignement de la surface externe visible du carter, ajoutant ainsi à l'esthétique de la liaison.

## Revendications

1. Dispositif d'essuie-glace comportant une tête d'entraînement (15) susceptible d'être couplée en rotation à un arbre d'entraînement et un bras d'essuie-glace (13), ce bras d'essuie-glace (13) comprenant un carter (14) articulé par une extrémité (14a) sur la tête d'entraînement (15) autour d'un axe de débattement (D) s'étendant transversalement audit arbre d'entraînement (16), une tige porte-balai (22) engagée à une extrémité dans le carter, apte à recevoir par son autre extrémité un balai d'essuyage adapté à venir au contact d'une surface à essuyer, et un ressort de pression de contact (23) agissant entre la tête d'entraînement (15) et le bras d'essuie-glace (13), en vue de presser le balai sur la surface à essuyer, le dispositif comprenant en outre un capuchon (30) destiné à coiffer en position de travail du dispositif d'essuie-glace la tête d'entraînement (15) et l'extrémité (14a) du carter articulée sur celle-ci, le capuchon (30) étant maintenu en place par complémentarité de formes entre des premiers moyens de montage (35 ; 36) prévus sur la surface interne du capuchon et des seconds moyens de montage (28) situés sur la surface externe de l'extrémité du carter (14a) articulée sur la tête d'entraînement, le capuchon étant retenu sur la tête d'entraînement de manière à pouvoir pivoter autour d'un axe de montage (F) caractérisé en ce que l'axe de montage (F) coïncide avec l'axe d'une tige cylindrique (28) solidaire de la tête d'entraînement et servant à l'accrochage dudit ressort de pression de contact sur cette dernière.

2. Dispositif d'essuie-glace selon la revendication 1, caractérisé en ce que lesdits premiers moyens de montage comprennent deux logements cylindriques (35) aptes à s'engager sur des parties saillantes correspondantes formant seconds moyens de montage.

3. Dispositif d'essuie-glace selon la revendication 2, caractérisé en ce que lesdites parties saillantes sont constituées par les deux extrémités de ladite tige cylindrique (28).

4. Dispositif d'essuie-glace selon la revendication 3, caractérisé en ce que ladite tige cylindrique (28) est engagée à ses extrémités dans des perçages oblongs (29) prévus sur le carter, la tige cylindrique venant en butée contre le bord de ces perçages pour limiter le pivotement autour de l'axe de débattement du bras d'essuie-glace (13) lorsque celui-ci est manuellement déplacé vers une position relevée libérant la surface à essuyer.

5. Dispositif d'essuie-glace selon la revendication 1, caractérisé en ce que lesdits premiers moyens de montage comprennent deux tétons (35) en saillie sur la surface interne du capuchon, disposés en vis-à-vis l'un de l'autre, aptes à s'engager dans des perçages oblongs prévus sur le carter, en retrait desquels se situe ladite tige cylindrique (28).

6. Dispositif d'essuie-glace selon l'une des revendications 1 à 5, caractérisé en ce le capuchon (30) comporte sur sa surface interne des nervures radiales (34) aptes à servir de butée de pivotement autour de l'axe de montage (F) pour le capuchon (30) par appui sur la surface externe de ladite tête d'entraînement.

## Claims

1. A windscreen wiper device, including a drive head (15) capable of being rotatably coupled to a drive shaft, and a windscreen wiper arm (13) which includes a housing (14), one end (14a) of which is pivotally mounted on the drive head (15) about a deflection axis (D) which extends transversely to said drive shaft (16), a wiper-blade-carrying rod (22), one end of which is engaged in the housing and the other end of which receives a wiper blade designed to make contact with the surface to be wiped, and a contact pressure spring (23) acting between the drive head (15) and the windscreen wiper arm (13) so as to press the wiper blade against the surface to be wiped, the device also including a cap (30) designed, when the windscreen wiper device is in the operating position, to cover both the drive head (15) and the end (14a) of the housing which is pivoted to the drive head, the cap (30) being held in place by means of the complementary shapes of first mounting means (35; 36) provided on the inside surface of the cap and of second mounting means (28) situated on the outside surface of the end (14a) of the housing which is pivoted on the drive head, the cap being retained on the drive head in such a manner as to enable it to pivot about a mounting axis (F), the device being characterized in that the mounting axis (F) coincides with the axis of a cylindrical pin (28) which is integral with the drive head and which serves to anchor said contact pressure spring to the drive head.

2. A windscreen wiper device according to claim 1, characterized in that said first mounting means comprise two cylindrical seatings (35) suitable for engagement over corresponding protruding portions which form the second mounting means.

3. A windscreen wiper device according to claim 2, characterized in that said protruding portions are constituted by the two ends of said cylindrical pin (28).

4. A windscreen wiper device according to claim 3, characterized in that the ends of said cylindrical pin (28) are engaged in oblong slots (29) provided in the housing, the cylindrical pin abutting against the edges of those slots so as to limit the pivotal motion of the windscreen wiper arm (13) about the deflection axis, when the arm is manually raised towards a lifted position in which it is clear of the surface to be wiped.

5. A windscreen wiper device according to claim 1, characterized in that said first mounting means comprise two studs (35) situated opposite one another and protruding beyond the inside surface of the cap, these studs being suitable for engagement in oblong slots provided in the housing, said cylindrical pin (28) being setback between these studs.

6. A windscreen wiper device according to any of claims 1 to 5, characterized in that the inside surface of the cap (30) includes radial ribs (34) which are suitable for acting as stops for the pivotal motion of the cap (30) about the mounting axis (F), by bearing against the outside surface of said drive head.

## Patentansprüche

1. Scheibenwischer, bestehend aus einem Antriebskopf (15), der drehbar mit einer Wischerantriebswelle und einem Scheibenwischerarm (13) verbunden werden kann, wobei dieser Scheibenwischerarm (13) ein Gehäuse (14) umfaßt, das mit einem Ende (14a) schwenkbar am Antriebskopf (15) um eine Auslenkachse (D) gelagert ist, die sich quer zu der besagten Wischerantriebswelle (16) erstreckt, und einen Wischblatthalter (22), der an einem Ende in das Gehäuse eingesetzt ist und an seinem anderen Ende ein Wischblatt aufnehmen kann, das auf einer zu wischenden Fläche angedrückt werden kann, sowie eine Anpreßdruckfeder (23), welche zwischen dem Antriebskopf (15) und dem Scheibenwischerarm (13) wirksam ist, um das Wischblatt auf der zu wischenden Fläche anzudrücken, wobei der Scheibenwischer außerdem eine Abdeckkappe (30) umfaßt, um in Arbeitsstellung des Scheibenwischers den Antriebskopf (15) und das daran schwenkbar gelagerte Ende (14a) des Gehäuses abzudecken, wobei die Abdeckkappe (30) durch formschlüssiges Zusammenwirken zwischen ersten Montagemitteln (35; 36), die an der Innenfläche der Abdeckkappe vorgesehen sind, und zweiten Montagemitteln (28), die sich an der Außenfläche des schwenkbar am Antriebskopf gelagerten Endes (14a) des Gehäuses befinden, gesichert ist und wobei die Abdeckkappe am Antriebskopf schwenkbar um eine Einbauachse (F) befestigt ist , **dadurch gekennzeichnet**, daß die Einbauachse (F) mit der Achse eines zylindrischen Stifts (28) zusammenfällt, der fest mit dem Antriebskopf verbunden ist und zur Befestigung der besagten Anpreßdruckfeder an diesem Antriebskopf dient.

2. Scheibenwischer nach Anspruch 1 , **dadurch gekennzeichnet,** daß die ersten Montagemittel zwei zylindrische Aufnahmen (35) umfassen, die mit entsprechenden vorspringenden Teilen zusammenwirken können, die zweite Montagemittel bilden.

3. Scheibenwischer nach Anspruch 2 , **dadurch gekennzeichnet,** daß die besagten vorspringenden Teile durch die beiden Enden des besagten zylindrischen Stifts (28) gebildet werden.

4. Scheibenwischer nach Anspruch 3 , **dadurch gekennzeichnet,** daß der besagte zylindrische Stift (28) mit seinen Enden in längliche Bohrungen (29) eingesetzt ist, die am Gehäuse vorgesehen sind, wobei der zylindrische Stift an der Kante dieser Bohrungen zum Anschlag kommt, um die Schwenkbewegung um die Auslenkachse des Scheibenwischerarms (13) zu begrenzen, wenn dieser von Hand in eine hochgeklappte Position bewegt wird, um die zu wischende Fläche freizulegen.

5. Scheibenwischer nach Anspruch 1 , **dadurch gekennzeichnet,** daß die ersten Montagemittel zwei Zapfen (35) umfassen, die an der Innenfläche der Abdeckkappe vorstehen und einander gegenüberliegend angeordnet sind und die in längliche Bohrungen eingreifen können, die am Gehäuse vorgesehen sind und zu denen der besagte zylindrische Stift (28) zurückversetzt ist.

6. Scheibenwischer nach einem der Ansprüche 1 bis 5, **dadurch gekennzeichnet,** daß die Abdeckkappe (30) an ihrer Innenfläche radiale Rippen (34) umfaßt, die als Schwenkanschlag für die Abdeckkappe (30) bei der Schwenkbewegung um die Einbauachse (F) dienen, was durch Anlage an der Außenfläche des Antriebskopfes erfolgt.
